# EUROPÄISCHE PATENTANMELDUNG

(11) **EP 2 744 071 A2**
(43) Veröffentlichungstag der Anmeldung: **18.06.2014**
(21) Anmeldenummer: 14159239.4
(22) Anmeldetag: 03.05.2011
(51) Int. Cl.: H02K 1/14, F04D 13/06, H02K 5/128, H02K 15/02, H02K 21/14

(54) **Pumpe mit integriertem elektronisch kommutierten Gleichstrommotor**

(30) Priorität: 06.05.2010 DE 102010019502
(62) Teilanmeldung aus: 11831797.3
(71) Anmelder: Bühler Motor GmbH, 90459 Nürnberg (DE)
(72) Erfinder: Bernreuther, Georg, 90449 Nürnberg (DE); Peterreins, Thomas, 90491 Nürnberg (DE)

(57) **Zusammenfassung**

Die Erfindung betrifft eine Pumpe (1) mit integriertem elektronisch kommutierten Gleichstrommotor (2) mit permanentmagnetischem in einem Nassraum angeordneten Innenrotor, der mit einem Kreiselpumpenlaufrad (22) eine kompakte Pumpenrotorbaueinheit (3) bildet, einem in einem Trockenraum (4) angeordneten, Klauenpolbleche (6) aus weichmagnetischem Werkstoff, eine ringförmige Wicklung (12) und einen auf die Klauenpolbleche (6) montierten und um die Wicklung (12) herum angeordneten weichmagnetischen Rückschlussring (13) umfassenden, Klauenpolstator (9) und einem Spalttopf (10), der den Trockenraum vom Nassraum (5) trennt. Aufgabe der vorliegenden Erfindung ist es eine Pumpe darzustellen, mit der höhere Wirkungsgrade und Leistungen erzielbar sind als mit herkömmlichen Klauenpolstatoren und dabei aber deren Vorteile im Wesentlichen beibehalten werden können, insbesondere geringes Gewicht, einfacher Aufbau und damit wirtschaftliche Herstellbarkeit und Robustheit. Diese Aufgabe wird erfindungsgemäß durch das Kennzeichen des Anspruchs 1 gelöst.

## Beschreibung

Die Erfindung betrifft eine Pumpe (1) mit integriertem elektronisch kommutierten Gleichstrommotor (2) mit permanentmagnetischem in einem Nassraum angeordneten Innenrotor, der mit einem Kreiselpumpenlaufrad (22) eine kompakte Pumpenrotorbaueinheit (3) bildet, einem in einem Trockenraum (4) angeordneten, Klauenpolbleche (6) aus weichmagnetischem Werkstoff, eine ringförmige Wicklung (12) und einen auf die Klauenpolbleche (6) montierten und um die Wicklung (12) herum angeordneten weichmagnetischen Rückschlussring (13) umfassenden, Klauenpolstator (9) und einem Spalttopf (10), der den Trockenraum vom Nassraum (5) trennt.

Aus der DE 10 2006 021 246 A1 ist eine gattungsgemäße Pumpe bekannt, die mit einem Klauenpolstator, bestehend aus zwei Klauenpolblechen mit ineinandergreifenden, gegensinnige Pole bildenden achsparallelen Klauen, versehen ist. Da die Klauenpolbleche jeweils aus einem einzigen weichmagnetischen Blech gebildet sind, gerät der Stator vor allem im Bereich der axialen Statorenden bei höherer an die Wicklung angelegter Spannung in Sättigung, wodurch die Leistungsfähigkeit der Pumpe begrenzt ist. Klauenpolstatoren zeichnen sich durch einfache Herstellbarkeit, geringes Gewicht und Robustheit aus, daher scheidet in vielen Fällen der Einsatz von Ankerstatoren, mit einer Vielzahl von Einzelpolwicklungen und einem geblechten Statorpaket insbesondere bei Einsatz als Zusatzwasserpumpe im Kraftfahrzeug aus.

Aufgabe der vorliegenden Erfindung ist es daher eine Pumpe darzustellen, mit der höhere Wirkungsgrade und Leistungen erzielbar sind als mit herkömmlichen Klauenpolstatoren und dabei aber deren Vorteile im wesentlichen beibehalten werden können, insbesondere geringes Gewicht, einfacher Aufbau und damit wirtschaftliche Herstellbarkeit und Robustheit.

Diese Aufgabe wird erfindungsgemäß durch das Kennzeichen des Anspruchs 1 gelöst. Durch die vier Klauenpolbleche vergrößert sich der Querschnitt der weichmagnetischen Pole, wodurch diese einen größeren magnetischen Fluss aufnehmen können. Der grundsätzliche Aufbau ändert sich nur unwesentlich gegenüber der bewährten Ausführung. Es ist weiterhin möglich die Pumpe mit einer einzigen Statorspule zu betreiben. Durch die unterschiedliche Länge der Klauenpole kann Gewicht gespart werden, ohne den grundsätzlichen Aufbau zu ändern. Durch die langen Klauenpole kann eine größere Polfläche nutzbar gemacht werden. Die erzielte höhere Leistung rechtfertigt den hierbei nötigen höheren Fertigungsaufwand. Die kürzeren Klauenpole können mit herkömmlichen wirtschaftlich sehr günstigen Methoden nämlich durch Ausstanzen aus einem Blech und Abwinklung aus der Blechebene hergestellt werden. Durch den gleichen Radius im Übergangsbereich verbleibt zwischen den beiden Klauenpolblechen dort ein geringer Freiraum, wodurch gewährleistet ist, dass die beiden Klauenpolbleche stets eng aneinander anliegen können.

Weiterbildungen der Erfindung sind in den Unteransprüchen dargestellt. Da die Länge der Klauenpole (77, 77') in achsparalleler Richtung, die radial weiter von der Pumpenrotorbaueinheit entfernt angeordnet sind, kleiner als der Radius desselben einbeschriebenen Kreises ist, kann bei höherem Wirkungsgrad Gewicht gleichzeitig das zusätzliche Gewicht der kürzeren Klauenpole begrenzt werden.

Es hat sich gezeigt, dass die kürzeren Klauenpole mit einer Klauenpolfläche zwischen 40% und 75% und/oder Längen von 30% bis 60% der längeren Klauenpole die genannten Voraussetzungen erfüllen.

Es kann vorteilhaft sein, die Blechdicke der kürzeren Klauenpole kleiner zu wählen als die Blechdicke der längeren Klauenpole, wenn dadurch die geforderte Leistung erreichbar ist. Dadurch wird weiter Gewicht eingespart und die Fertigung noch wirtschaftlicher möglich.

Um die Wirbelstromverluste im Stator so gering wie möglich zu halten wird vorgeschlagen die den aneinander anliegenden Flächen der Klauenpolbleche mit einer Isolierschicht zu versehen. Geeignet sind hier übliche Lackschichten, wie sie auch bei Blechpaketen üblich sind.

Bei aufeinanderliegenden Blechen im magnetischen Kreis, kann es zu Vibrationen kommen, die unangenehme Geräusche verursachen. Um diesen Effekt zu vermeiden oder zumindest deutlich einzuschränken, ist vorgesehen dass die Klauenpole eines Klauenpolblechs in einem Vormontagezustand in geringem Maße konisch verformt sind, soweit dass ein Zurückbewegen bis zu einer Achsparallelen innerhalb des elastischen Bereichs möglich ist und dass die verformten Klauenpole im montierten Zustand zumindest teilweise in Richtung der Achsparallelen zurückbewegt und in dieser Lage mit den benachbarten gleichpoligen Klauenpolen unter mechanischer Vorspannung verbunden sind. Die mechanische Vorspannung verhindert, dass Klauenpole frei schwingen und damit Geräusche verursachen können. Zusätzlich kann die Fixierung noch verstärkt werden durch Vernippelung, Klebung oder Punktschweißung. Es ist auch möglich, dass die mechanische Vorspannung durch das Fügen der Klauenpolbleche miteinander hergestellt wird.

Da das Klauenpolblech mit den längeren Klauenpolen in der Regel den größeren magnetischen Fluss aufnimmt ist es wichtig den magnetischen Kreis über diese Bleche mit dem magnetischen Rückschluss möglichst verlustfrei zu schließen. Um daher toleranzbedingte Luftspalte so gering wie möglich zu halten weist der Ring der Klauenpole mit den kürzeren Klauenpolen einen geringfügig kleineren Außendurchmesser als der Ring der Klauenpole mit den längeren Klauenpolen auf. Hierzu genügt ein Durchmesserunterschied von weniger als 0,1 mm. Somit wird gewährleistet, dass der Rückschlussring bevorzugt am Ring mit dem größeren Durchmesser und dem größeren magnetischen Fluss anliegt.

Um die Robustheit der Statoreinheit zu verbessern und die Körperschallübertragung zu minimieren, ist vorgesehen, dass zumindest an einen Ring (8, 8') eines Klauenpolblechs an einer von der Wicklung abgewandten Seite ein Kunststoffformkörper (14) anschließt, der Aufnahmemittel (15, 17) für eine Leiterplatte (16) und Klemmschneidverbinder (18) aufweist, wobei der Kunststoffformkörper (14) durch Umspritzen hergestellt ist und die vier Klauenpolbleche (6, 6', 66, 66') zumindest teilweise umschließt und fixiert wodurch der Stator einen kompakten Ringkörper bildet, der nur über rippenartige und/oder noppenartige Bereiche am Spaltrohr fest anliegt.

Ein Ausführungsbeispiel der Erfindung wird nachfolgend anhand der Zeichnung näher erläutert. Es zeigen:
Fig.1 einen aus zwei unterschiedlichen Klauenpolblechen bestehenden Teilstatorkern,
Fig. 2 einen aus zwei Teilstatoren aus Fig. 1 zusammengesetzten Statorkern,
Fig. 3 eine andere Darstellung der zwei Teilstatoren aus anderer Perspektive,
Fig. 4 eine andere Darstellung der Klauenpolbleche gemäß Anspruch 1,
Fig. 5 eine Darstellung von Fig. 4 aus anderer Perspektive,
Fig. 6 eine Schnittansicht einer Pumpe,
Fig. 7 eine Detailansicht der Klauenpolbleche,
Fig. 8 eine körperschallminimierende Statoraufnahme,
Fig. 9 eine Explosionsdarstellung von Teilen der Pumpe und
Fig. 10 eine weitere Explosionsdarstellung der Pumpe.

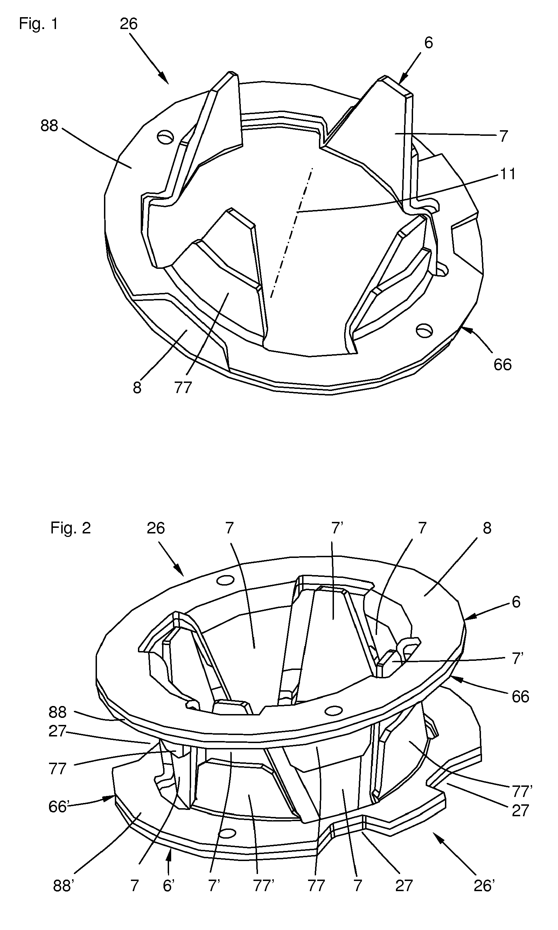

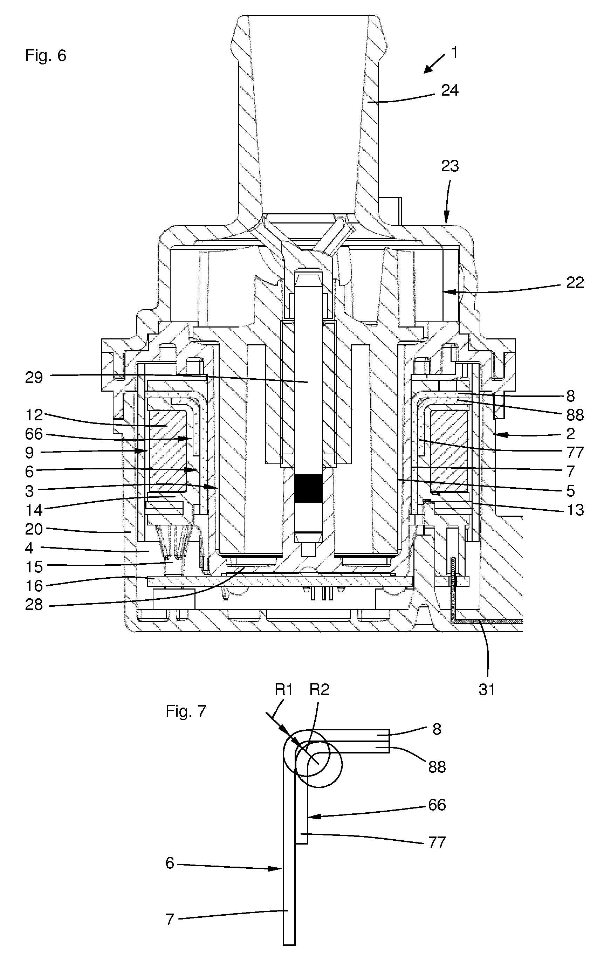

Die Fig. 1, 4 und 5 zeigen eine aus zwei unterschiedlichen Klauenpolblechen 6, 66 aufgebauten Teilstatorkern 26. Die Unterschiede der Klauenpolbleche 6, 66 bestehen im wesentlichen im unterschiedlichen Radius des einbeschriebenen Kreises der Klauenpole 7, 77. Beide Klauenpolbleche 6, 66 weisen einen Ring 8, 88 auf, von dem über einen Biegeradius R1, R2 (Fig. 7) die Klauenpole um 90° abgewinkelt und parallel zu einer Pumpenachse 11 verlaufen. Die Klauenpole 7, 77 sind im vorliegenden Beispiel in ihrer Grundform trapezförmig. Die Klauenpole 7, 77 weisen jeweils dieselbe Polung auf. Die beiden Ringe 8, 88 und die Klauenpole 7, 77 liegen großflächig aneinander an. Die Klauenpole 7, 77 sind parallel zu einer zentralen Pumpenachse 11 ausgerichtet

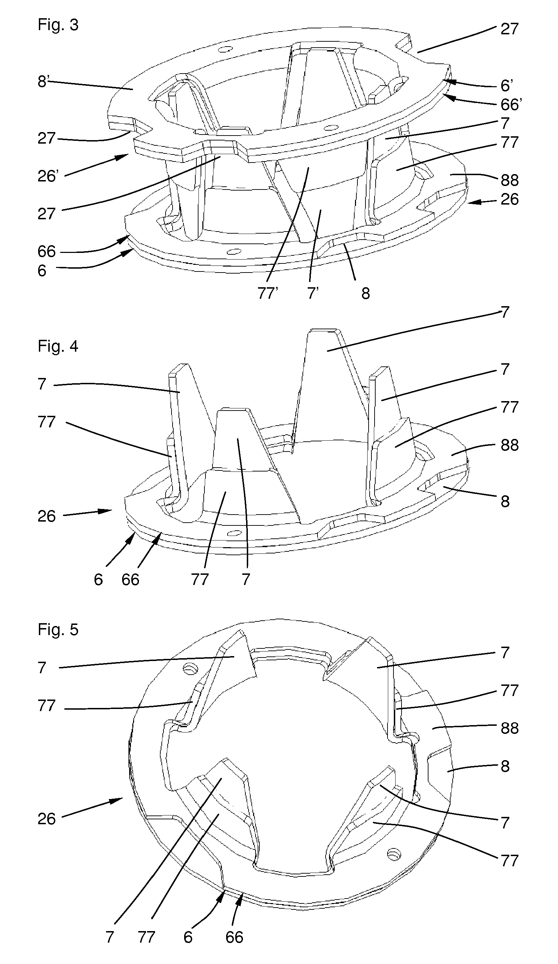

Die Fig. 2 und 3 zeigen einen aus zwei Teilstatoren 26, 26' zusammengesetzten Statorkern, bei dem die jeweils trapezförmig ausgebildeten Klauenpole 7, 7', 77, 77' unter Belassung eines Luftspalts ineinandergreifen und somit über den Umfang abwechselnd Nord- bzw. Südpole bilden. Die beiden Teilstatorkerne unterscheiden sich durch Aussparungen 27, die als Durchbrüche für die Wicklungsanschlüsse und als Verdrehsicherung dienen.

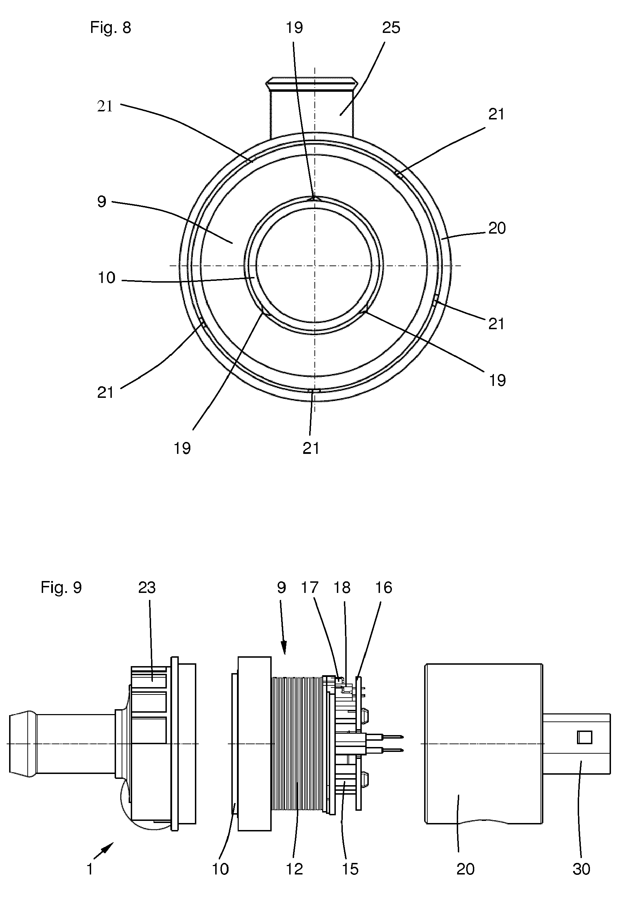

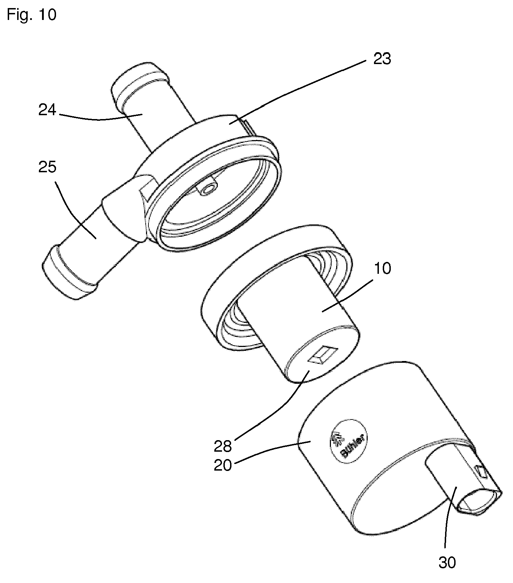

Fig. 6 zeigt eine Schnittdarstellung durch die Pumpe und den integrierten elektronisch kommutierten Gleichstrommotor, mit den Statorblechen 6, 66, bestehend aus den Klauenpolen 7, 77 und den Ringen 8, 88, wobei diese in einem Kunststoffformkörper 14 eingebettet sind, welcher durch Umspritzen der Klauenpolbleche hergestellt ist. Der Kunststoffformkörper ist ein eigenständiges Bauteil, das als Spulenkörper für eine Wicklung 12 dient. Der Kunststoffformkörper 14 bildet zusammen mit der Wicklung und einem Rückschlussring 13, der durch Umformung von Teilbereichen des Rückschlussringes 13 fest mit den Ringen 8, 88 der Klauenpolbleche 6, 66 verbunden ist, einen Klauenpolstator 9. Der Klauenpolstator 9 trägt durch mechanische Aufnahmemittel 15 eine Leiterplatte 16, die einerseits mit Enden der Wicklung 12 elektrisch verbunden ist und andererseits über Leitbleche 31 mit einem Stecker 30 (Fig. 9, 10). Der Klauenpolstator 9 ist um einen Spalttopf 10 herum angeordnet und mit diesem kraftschlüssig verbunden. Ein Motorgehäuse 20 bildet zusammen mit dem Spalttopf 10 einen Trockenraum 4 in dem der Klauenpolstator 9 flüssigkeitsdicht aufgenommen ist. Innerhalb des Spalttopfs 10 befindet sich eine permanentmagnetische Pumpenrotoreinheit 3, die aus einem Motorabschnitt und einem Pumpenabschnitt besteht. Der Motorabschnitt ist radial innerhalb der Klauenpole 7, 77 angeordnet und weist einen Permanentmagnetring auf, der aus kunststoffgebundenem Magnetmaterial zusammen mit einem Kreiselpumpenlaufrad 22 und einem Lagerschaft urgeformt ist. Die Pumpenrotoreinheit 3 ist auf einer Achse 29 gelagert, die einerseits in einem Boden 28 des Spalttopfs 10 und andererseits im Pumpengehäuse befestigt ist. Die Pumpenrotoreinheit 3 befindet sich in einem Nassraum 5, der durch das Pumpengehäuse 23 und den Spalttopf 10 begrenzt wird. Das Pumpengehäuse umfasst einen achssymmetrischen Saugstutzen 24 und einen Druckstutzen 25 (Fig. 8), der radial zur Pumpenachse 11 verläuft. Der Permanentmagnet der Pumpenrotoreinheit kann auch aus gesintertem Ferrit-Material, kunststoffgebundenem Ferrit-Material, kunststoffgebundenem Seltenerdmaterial oder gepresstem Seltenerdmaterial bestehen. Der Ringmagnet kann aus Segmenten zusammengesetzt sein, zusätzlich auch mit Kunststoffmaterial umspritzt oder von einem metallischen Ring umgeben sein. Weiter kann die Pumpenrotoreinheit auch mit einem weichmagnetischen Rückschlussring versehen sein.

Fig .7 zeigt die Klauenpolbleche 6, 66 im Übergangsbereich zwischen dem Ring 8, 88 und den Klauenpolen 7, 77, der durch Radien R1, R2 gekennzeichnet ist. Die Radien R1 und R2 sind gleich groß oder zumindest in der gleichen Größenordnung.

Fig. 8 zeigt wie der Klauenpolstator 9 auf dem Spalttopf 10 und im Motorgehäuse 20 eingebaut ist. Der Spalttopf 10 ist mit drei achsparallelen Rippen 19 einstückig, auf welche der Klauenpolstator 9 aufgepresst ist. Das Motorgehäuse 20 ist mit fünf achsparallelen Rippen 21 einstückig, über welche das Motorgehäuse straff auf dem Klauenpolstator 9 aufgezogen ist. Die Rippen dienen dazu, dass ein von der Pumpenrotoreinheit erzeugtes Geräusch nur in begrenztem Maße auf das Motorgehäuse übertragen wird.

Fig. 9 zeigt eine Explosionsdarstellung mit dem Pumpengehäuse 23, dem Spalttopf 10, dem Klauenpolstator 9, mit der Wicklung 12, der Leiterplatte 16, die über Aufnahmemittel 15 am Klauenpolstator befestigt sind, Aufnahmen 17 für Klemmschneidverbinder 18 und mit der Leiterplatte 16 elektrisch verbundene Klemmschneidverbinder 18 (Darstellung ohne Rückschlussring) und dem Motorgehäuse 20 mit einem Stecker 30.

Fig. 10 zeigt eine weitere Explosionsdarstellung der Gehäuseteile der Pumpe, mit dem Pumpengehäuse 23, mit dem Saugstutzen 24 und dem Druckstutzen 25, dem Spalttopf mit dem Boden 28 und dem Motorgehäuse 20.

### Bezugszeichenliste

- 1: Pumpe
- 2: Gleichstrommotor
- 3: Pumpenrotorbaueinheit
- 4: Trockenraum
- 5: Nassraum
- 6, 66, 6', 66': Klauenpolbleche
- 7, 77, 7', 77': Klauenpole
- 8, 88, 8', 88': Ring
- 9: Klauenpolstator
- 10: Spalttopf
- 11: Pumpenachse
- 12: Wicklung
- 13: Rückschlussring
- 14: Kunststoffformkörper
- 15: Aufnahmemittel für Leiterplatte
- 16: Leiterplatte
- 17: Aufnahmemittel für Klemmschneidverbinder
- 18: Klemmschneidverbinder
- 19: rippenartige Bereiche
- 20: Motorgehäuse
- 21: Rippen
- 22: Kreiselpumpenlaufrad
- 23: Pumpengehäuse
- 24: Saugstutzen
- 25: Druckstutzen
- 26, 26': Teilstatorkern
- 27: Aussparung
- 28: Boden des Spalttopfs
- 29: Achse
- 30: Stecker
- 31: Leitblech

## Patentansprüche

1. Pumpe (1) mit integriertem elektronisch kommutierten Gleichstrommotor (2) mit permanentmagnetischem in einem Nassraum angeordneten Innenrotor, der mit einem Kreiselpumpenlaufrad (22) eine kompakte Pumpenrotorbaueinheit (3) bildet, in einem Trockenraum (4) angeordnete, Klauenpolbleche (6, 6') aus weichmagnetischem Werkstoff, eine ringförmige Wicklung (12) und einen auf die Klauenpolbleche (6, 6') montierten und um die Wicklung (12) herum angeordneten weichmagnetischen Rückschlussring (13) umfassenden, Klauenpolstator (9) und einem Spalttopf (10), der den Trockenraum vom Nassraum (5) trennt, **gekennzeichnet durch** die Kombination folgender Merkmale:
a) der Klauenpolstator (9) hat vier Klauenpolbleche (6, 66), die jeweils mehrere sich parallel zur Pumpenachse (11) erstreckende und an einen rechtwinklig zur Pumpenachse angeordneten Ring (8, 88) anschließende Klauenpole (7, 77) umfasst;
b) zwei gleichpolige Klauenpolbleche (6, 66) und zwei gegenpolige Klauenpolbleche (6', 66') wirken mit derselben Wicklung zusammen;
c) die gleichpoligen sowie die gegenpoligen Klauenpolbleche bestehen jeweils aus zwei unterschiedlich ausgebildeten Klauenpolblechen (6, 66, 6', 66') die ineinandergeschachtelt sind, so dass die Klauenpole (7, 77, 7', 77') zweier gleichpoliger Klauenpolbleche radial unterschiedlich weit von der Pumpenrotorbaueinheit entfernt aber in demselben Winkelsektor angeordnet sind, wobei der radiale Unterschied der Blechdicke der klauenpole entspricht, die der Pumpenrotorbaueinheit näher sind;
d) die achsparallele Länge der Klauenpole (7, 7'), die radial näher an der Pumpenrotorbaueinheit angeordnet sind, ist größer als der halbe Innendurchmesser des Klauenpolstators (9);
e) die Biegeradien (R1, R2) der ineinandergeschachtelten Klauenpolbleche (6, 66 bzw. 6', 66') im Übergangsbereich zwischen dem Ring (8, 88 bzw. 8', 88') und den Klauenpolen (7, 77 bzw. 7', 77') sind zumindest annähernd gleich groß, so dass zwischen den Klauenpolblechen (6, 66 bzw. 6', 66') im Übergangsbereich ein Spalt entsteht;
f) die Klauenpole (7, 7', 77, 77') eines Klauenpolblechs (6, 6', 66, 66') sind innerhalb des elastischen Bereichs vorgespannt;
g) die vorgespannten Klauenpole sind mit den benachbarten gleichpoligen Klauenpolen (7, 7'), z.B. **durch** Vernippelung, Klebung, oder Schweißung verbunden.

2. Pumpe nach Anspruch 1, **dadurch gekennzeichnet, dass** die achsparallele Länge der Klauenpole (77, 77'), die radial weiter entfernt von der Pumpenrotorbaueinheit angeordnet sind, kleiner als der halbe Innendurchmesser des Klauenpolstators (9) ist.

3. Pumpe nach Anspruch 1 oder 2, **dadurch gekennzeichnet, dass** die Polfläche der kürzeren Klauenpole (77, 77') zwischen 30% bis 100% der Polfläche der längeren Klauenpole (7, 7') beträgt.

4. Pumpe nach Anspruch 1, 2 oder 3, **dadurch gekennzeichnet, dass** die Polfläche der kürzeren Klauenpole (77, 77') zwischen 40% bis 75% der Polfläche der längeren Klauenpole (7, 7') beträgt.

5. Pumpe nach Anspruch 1, 2, 3 oder 4, **dadurch gekennzeichnet, dass** die Länge der kürzeren Klauenpole (77, 77') parallel zur Pumpenachse 30% bis 100% der Länge der längeren Klauenpole (7, 7') beträgt.

6. Pumpe nach Anspruch 1, 2, 3, 4 oder 5, **dadurch gekennzeichnet, dass** die Länge der kürzeren Klauenpole (77, 77') parallel zur Pumpenachse 30% bis 60% der Länge der längeren Klauenpole (7, 7') beträgt.

7. Pumpe nach Anspruch 1, 2, 3, 4, 5 oder 6, **dadurch gekennzeichnet, dass** die Blechdicke der Klauenpolbleche (66, 66') mit den kürzeren Klauenpolen (77, 77') kleiner oder gleich der Blechdicke der klauenpolbleche (6, 6') mit den Längeren Klauenpolen (7, 7') ist.

8. Pumpe nach Anspruch 7, **dadurch gekennzeichnet, dass** die Blechdicke der Klauenpolbleche (66, 66') mit den kürzeren Klauenpolen (77, 77') kleiner ist als die Blechdicke der Klauenpolbleche (6, 6') mit den längeren Klauenpolen (7, 7').

9. Pumpe nach Anspruch zumindest einem der vorangehenden Ansprüche, **dadurch gekennzeichnet, dass** die ineinandergeschachtelten gleichpoligen Klauenpolbleche (6, 66 und 6', 66') durch eine Isolierschicht, z.B. eine Lackschicht elektrisch voneinander isoliert sind.

10. Pumpe nach zumindest einem der vorangehenden Ansprüche, **dadurch gekennzeichnet, dass** alle radial benachbarten gleichpoligen Klauenpole (7, 77, 7', 77') miteinander punktverschweißt sind.

11. Pumpe nach zumindest einem der vorangehenden Ansprüche, **dadurch gekennzeichnet, dass** die Klauenpolbleche (6, 6') und (66, 66') über ihre Ringe (8, 8') und (88, 88') durch mindestens zwei Schweißpunkte miteinander Punktverschweißt sind.

12. Pumpe nach zumindest einem der vorangehenden Ansprüche, **dadurch gekennzeichnet, dass** der Ring (88, 88') der Klauenpolbleche mit den kürzeren Klauenpolen einen geringfügig kleineren Außendurchmesser als der Ring (8, 8') der Klauenpolbleche mit den längeren Klauenpolen aufweist, wobei der Durchmesserunterschied weniger als 0,1 mm beträgt.

13. Pumpe nach zumindest einem der Ansprüche 2 bis 12, **dadurch gekennzeichnet, dass** zumindest an einen Ring (8, 8') eines Klauenpolblechs an einer von der Wicklung abgewandten Seite ein Kunststoffformkörper (14) anschließt, der Aufnahmemittel (15, 17) für eine Leiterplatte (16) und Klemmschneidverbinder (18) aufweist, wobei der Kunststoffformkörper (14) durch Umspritzen hergestellt ist und die vier Klauenpolbleche (6, 6', 66, 66') zumindest teilweise umschließt und fixiert wodurch der Stator einen kompakten Ringkörper bildet, der nur über rippenartige und/oder noppenartige Bereiche am Spaltrohr fest anliegt.
